# EUROPEAN PATENT SPECIFICATION

(11) **EP 0 487 600 B1**
(45) Date of publication and mention of the grant of the patent: **27.03.1996**
(21) Application number: 90912870.4
(22) Date of filing: 15.08.1990
(51) Int. Cl.: A61L 11/00, B65B 55/14, C05F 3/00, C05F 7/00, C05F 9/00, C05F 11/00

(54) **PROCESS AND PLANT FOR PRODUCING HEAT TREATED GROWTH SUBSTRATE AND MANURE**
VORRICHTUNG UND VERFAHREN ZUR HERSTELLUNG EINES HITZEBEHANDELTEN SUBSTRATS UND DÜNGEMITTEL
PROCEDE ET INSTALLATION DE PRODUCTION DE SUBSTRAT OU D'ENGRAIS DE CROISSANCE THERMOTRAITES

(30) Priority: 16.08.1989 DK 4016/89
(43) Date of publication of application: 03.06.1992
(60) Divisional application: 95112377.7
(73) Proprietor: CLAUSEN, Hans Jacob, DK-7000 Fredericia (DK)
(72) Inventor: CLAUSEN, Hans Jacob, DK-7000 Fredericia (DK)
(74) Representative: Skoett-Jensen, Knud
(86) International application number: DK9000208
(87) International publication number: WO9102550

(56) References cited:
- EP-A- 0 110 430
- DE-A- 1 592 737
- DE-A- 3 742 641
- DE-C- 0 658 953

## Description

The invention relates to a process and a plant for producing a heat treated natural manure material or a fertilized enriched substrate material ready for use. In connection with the invention is preferably referred to a substrate on basis of so-called coco dust or coir dust, which is a waste product from the production of coco fibres, but the invention is not limited thereto, as the material can also be sphagnum or other biological substrates as well as purely natural manure, e.g. poultry manure. In natural substrate materials there usually happens to be a rather high quantity of weed seeds and insect eggs, which are unwanted by most usages of the substrates, and as there can also be unwanted bacteria and fungi it has been proposed to subject the substrates to a heat treatment before delivery to the users, which mainly are nurseries. Something similar applies to purely natural manure materials.

The heat treatments used hitherto have, however, been rather expensive and not too efficient and generally they have not left the experimental stage. Moreover, while many difficulties are avoided by the use af a pasteurized substrate, the substrate will be highly vulnerable to intrusion of new and undesired microbiological matter, so even the experimental use has not produced too valuable or reliable results.

It is the primary object of the invention to provide a process by which the treatment can be carried out in an industrial sense, both more effectively and much less expensively.

For an industrial heat treatment it is well known to use a flow-through kiln with a perforated revolving drum to which heat is led form an external fixed kiln jacket, and with the invention use is still made of such a kiln. Care is taken, however, that the outflow of material passes through a heat insulated zone so that the effective time of treatment for a given heating effect can be prolonged. Said closed passing zone is continued in a closed cooling zone, and, in case of substrates, further through an admixing station for fertilizer substance and microbiological matter and still further to a delivery station, preferably a bag filling station, altogether in a closed system. Hereby a very high degree of utilization of the supplied heating effect is obtained so as to achieve a pasteurization of the material, and the achieved high purity of the material is maintained altogether until the material is delivered to closed containers, e.g. sacks namely due to the said closed system. It is undesirable to deliver the material in hot condition, as also certain fertilizer substances can be damaged by too high a temperature, and therefore the said cooling is used, which can be carried out in a simple manner by a through-blowing of air, which air should only be scantily filtrated. Constructionally a relatively short conveyor to the delivery place can then be used, as the material shall not cool off by itself during the transportation.

For a good and homogeneous result it is furthermore of importance that the material is transported in a well-controlled manner through the kiln zone, and accordingly an especially designed feeding system is used, by which this is achievable.

It has been found that the structure or texture of the sphagnum material thus treated is highly improved for growing purposes, the structure being changed in the direction of a more crumby material, which is highly advantageous for the plants e.g. by exhibiting a remarkably reduced collapsing tendency. The formation of the crumby structure is favored by keeping in the kiln practically all moisture or steam developed during the heat treatment of the material, this also accounting for a very efficient pasteurization. At least as far as sphagnum is concerned it is not desired to dry the material, so it may leave the kiln as moist as it was supplied.

Plants have been observed to grow and develop much better in the new material, and a remarkable decrease of the conductivity value has been measured, this being significant to experts in the art.

The sphagnum raw material is always available, but it is supplied from different source areas, whereby its quality and microbiological properties may vary. The users cannot rely on the quality being unchanged for each new shipment, and also for that reason the sphagnum material is not used as much as it could deserve, in view of the relatively low price and the good quality aspects thereof. However, when treated according to the invention the sphagnum quality is raised to an almost uniform level for the various types of the material, so the treatment can be effected continuously and the users can rely on the delivery of a practically uniform high quality product through all seasons.

A very important aspect of the invention is that the quality of the product is further increased by a controlled introduction of certain fungal and bacterial species which will protect the substrate from intrusion of exterior dangerous biological matter at the site of use and condition a perfect growth of the plants. Some useful species have already been found, sufficient to make the product applicable in large scale use, but it is to be admitted that a very large research work is still to be done for perfectioning the product, e.g. in a selective manner for different plants.

Seen on this background another important aspect of the invention is to provide a basic condition for such an important research work to be carried out at all, because a research carried out at laboratory conditions will not be representative for actual practice.

The invention is described in more detail in the following with reference to the drawing, in which:-
Fig. 1 is a perspective view of a complete treating plant according to the invention,
Fig. 2 is a cross sectional view of a flow-through kiln of said plant, and
fig. 3 is a cross sectional view of an aftercoupled treatment unit.

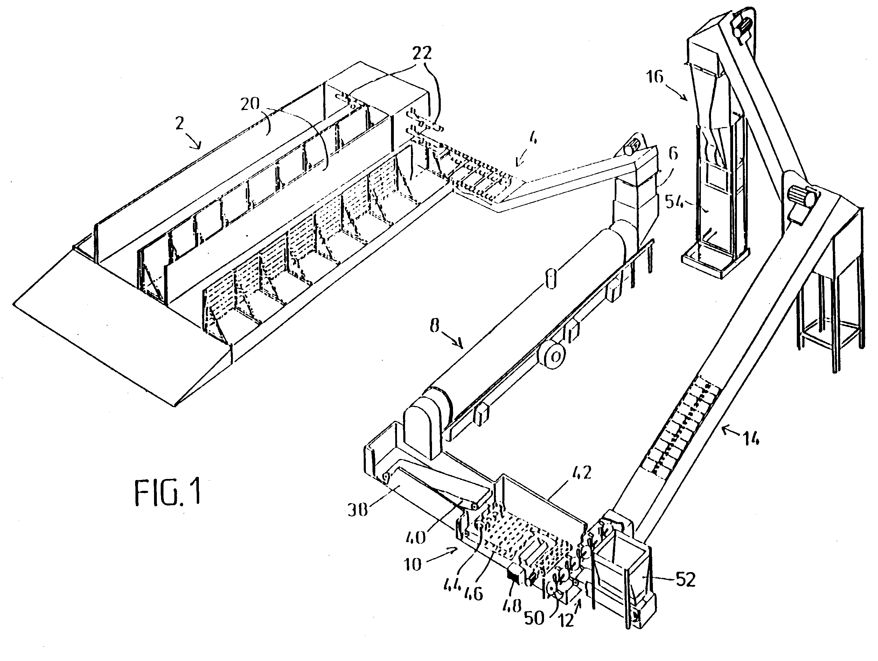

The plant shown in Fig. 1 comprises as main parts a silo plant 2 for reception of natural substrate material; a conveyor 4 connected therewith for feeding of the material to a receptacle 6; a succeeding pasteurizing kiln 8, the outlet of which the material is conveyed to an admixer station 12 for fertilizers; and a conveyor 14 which transports the material to a delivery station 16, from which the material can be delivered e.g. packed in sacks.

The silo plant 2 comprises two plane silos 20 each of which (in the left-hand side) is shaped with an open reception end for a substrate, and which in a manner not shown is equipped with a bottom plate which can act as a forwardly moving conveyor belt for feeding the material towards the opposite, closed ends of the respective silos, where the transverse conveyor 4 will pass the material to the kiln 8. At the delivery end of the silo units 20 are placed transverse scrape-down rotors 22 which will loosen the supplied material to fall down on the conveyor 4. The forward pushing of the material in the two shown silo sections is made alternating in such a manner that one silo section is emptied, while the other is inoperative, i.e. only disposed for reception of material by driving in the material through the associated open drive-in end, which is shown in the left-hand side, and accordingly a filling in can take place in one silo section while the contents in the other silo section is being emptied.

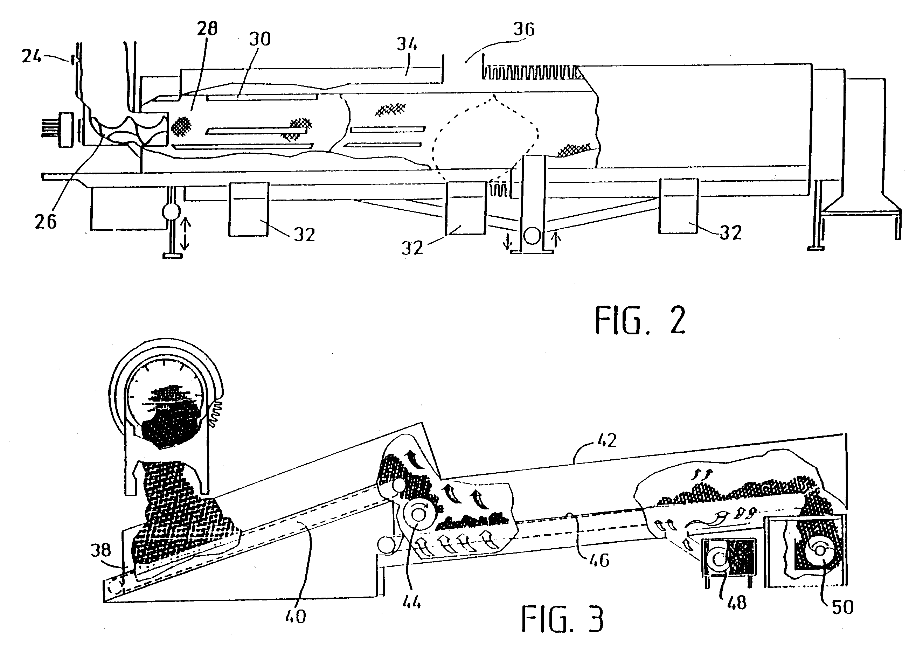

In the receptacle 6 as indicated in Fig. 2 there is placed a level detector device 24, which detects the material level in the receptacle and effects a stopping of the conveyor 4 as long as an over-filling of the receptacle 6 over a preset standard level might be detected. From the lower end of the receptacle 6 a continuous feeding of material into the kiln takes place, the lower end of the receptacle 6 being provided with a driven helical conveyor 26 in open connection with the feeding end of the tubular flow-through kiln 8. The level detector and the helical conveyor cause the formation of a material-plug at the inlet to the kiln and thereby prevent a return flow of gas in the system.

The kiln 8 is provided with a perforated kiln drum 28, which by means not shown is supported in a rotatable manner and is equipped with axially extending inwardly protruding wing parts 30, which by rotation of the kiln drum 28 will agitate the material, this then being transported forwards as the kiln is declined towards the outlet. At the bottom of the kiln 8 is placed a number of gas or oil burners 32 which deliver heat to the space between the outside of the kiln drum 28 and a surrounding heat insulating kiln jacket, 34 such that the heat therefrom penetrates into the perforated kiln drum, as at the middle of the kiln there is placed an upper exhaust 36 for giving off the supplied combustion gas and the contents of water vapour therein. Considerable amounts of water vapour will be involved not only from the combustion, but especially from the resulting water drive off from the manure or substrate material which initially typically contains approximately 20% water or approximately 14 kg water per m³. By a plant of a practical, preferred size this means a vapour outlet corresponding to 450 kg water per hour.

However, for certain materials such as sphagnum, it is not desired to dry the material, because the said crumby structure could then be compromised, and in that case the exhaust can be kept more or less closed. It will be appreciated that the vapour and steam cannot escape freely through the ends of the kiln; during the operation an equilibrium will be reached between vapour delivered from and readsorbed by the material.

At the delivery end of the kiln 8 the material is delivered to the station 10, namely by dropping down in a first section 38, which contains an upwardly inclined conveyor belt 40 and moreover is closed and heat insulated. In this section the material is transported relatively slowly and in a thick layer on the belt 40, i.e. the material will to a great extent maintain the temperature, to which it has been heated in the kiln 8, whereby the heat treatment of the material will be extended without additional energy consumption. The temperature, however, will decline towards an inefficient level, and the material will then at the upper end of the conveyor 40 be transported through a restricted slot at the ceiling of the station 38 and fall down in the following unit designated 42, which is a cooling unit in which the received falling down material hits a grater roller 44 and therefrom is led onto a conveyor 46, which is relatively fast moving such that the material is deposited in a thin layer thereon, and which is penetratable by cooling air delivered from a lower fan 48. Hereby it is possible to obtain a rapid cooling of the material, which on the conveyor 46 is transported to the admixing station 12, in which a cross-delivering wingrotor 50 is situated, the latter receiving substrate from one side, while from the opposite side it receives a fertilizer or a mixture of such additives. The rotor 50 causes an intensive mixing of substrate and additives and conveys the material further on the the upwardly inclined conveyor 14.

It should be endeavoured that the material is delivered from the kiln 8 at a temperature not below 90° C, and preferably at the delivery end of the kiln there is placed a temperature sensor, which by detection of a lower temperature causes an actuation of the drive means for rotation of the kiln drum 28 in such a manner that the run through velocity is reduced accordingly for achieving a higher temperature.

The delivery or sack filling station 16 does not need closer description, it should only be mentioned that optimally it should be a closed unit which received the final manure or substrate mixture from a closed conveying system 14 in such a manner that the delivered mixture can be filled in sacks 54 without the mixture having been exposed to reception of seeds or other external impurities after the heat treatment.

It is to be preferred that the flow of material through the kiln is controlled in such a manner that at the delivery end of the kiln there is achieved a material temperature which is close to 100°C, preferably between 90°C and 100°C, as a totally efficient heat treatment demands at least 80°C while conversely a heating to over 100°C will imply an undue overuse of energy and a possible damage of the material. The use of the mentioned inlet lock with the level sensor 24 will condition a well controlled flow to the kiln, and besides the time of flow-through can be varied in different manners, including more generally by an adjustment of the kiln in a more or less inclined position.

The invention is described above as particularly relevant for substrate materials but it will be understood that it is in actual fact just as relevant as far as pure manure products or other goods are concerned, when these should not be enriched by additional adding of fertilizers.

As mentioned, it is highly preferably or even necessary to add some species of fungi and bacteria, which can suitably be done in the mixer station 12. It is one of primary importance to enrich the pasteurized material with such species, which will protect against later intrusion of dangerous cultures, and for general use the fungal species trichoderma harzianun, pythion oligandrun and gliocladiun virens will be advantageous. Also several bacterial species will be suitable, one being bacillus streptomyces, which is already known to be natural antibiotics. However, further details in this respect will be a matter of scientific and practical research.

## Claims

1. A process for producing a heat treated fertilizer material or fertilizer enriched substrate material ready for use, by which a natural fertilizer or substrate material such as sphagnum in a flow is led through a heating kiln and preferably thereafter fertilizer substances and other additives are added,
characterized in that the material from the kiln outlet is led slowly through a heat insulated tunnel and thereafter at a higher speed and with less flow density through a cooling station, wherein the material flow is cooled by blow-through with air, and thereafter is led through an admixing station for continuous addition of said substances and therefrom further on to a delivery station, whereby the transportation of the material all the way takes place in a transportation system which is substantially closed in relation to the surroundings.

2. A process according to claim 1 characterized in that the heating is effected to complete or almost complete drying-out of the material and pasteurization thereof.

3. A process according to claim 1, characterized in that the heating is effected substantially without exhausting vapour from the kiln.

4. A process according to claim 1, characterized in that the supply of material to the flow-through kiln and the heating of same are controlled with good accuracy partly by use of an inlet lock with level control and partly by use of an outlet thermostat at the outlet end of the kiln.

5. A process according to claim 1, characterized in that after the cooling step various fungal and bacterial species are added to the flow of the material, primarily species acting as natural antibiotics.

6. A plant for performance of the process according to claim 1, comprising a flow through kiln with means for agitation of the material, characterized in that the outlet end of the kiln is connected with a closed and heat insulated conveying tunnel, which through a lock opening leads to a tunnel section, which is connected with means for cooling the material received, preferably by a transverse blow-through with filtrated air, said tunnel section leading to an admixing station for continuous addition of additives to the material flow, essentially under closed conditions, while also a further connection to a delivery station for the material is substantially closed in relation to the surroundings.

7. A plant according to claim 6, characterized in that the flow-through kiln is connected with means to exercise a well-controlled material flow, namely partly an inlet lock with a level detector which controls the material afflux to keep the material in the inlet lock constantly at a level above the top of the inlet opening of the kiln, and partly by a thermosensor placed at the outlet end of the kiln, which controls the kiln effect (heat effect/time of flow) for achieving a preset material temperature, preferably 90-100°C.

## Patentansprüche

1. Ein Verfahren zum Herstellen eines wärmebehandelten Düngermaterials oder eines mit Düngemittel angereicherten Substratmaterials in verbrauchsfertiger Form, durch das ein natürlicher Dünger oder ein Substratmaterial wie Torfmoos in einem Fluß durch einen Heizofen geleitet wird und vorzugsweise danach Düngersubstanzen und andere Additive zugefügt werden, dadurch gekennzeichnet, daß das Material von dem Ofenauslaß langsam durch einen wärmeisolierten Tunnel und danach mit einer höheren Geschwindigkeit und mit einer geringeren Fließdichte durch eine Kühlungsstation geleitet, in der der Materialfluß durch Durchblasen von Luft gekühlt wird, und danach durch eine Zumischstation zum kontinuierlichen Hinzufügen der besagten Substanzen und von dort weiter zu einer Abgabestation geleitet wird, wobei der Transport des Materials auf dem ganzen Weg in einem Transportsystem stattfindet, das im Verhältnis zu der Umgebung im wesentlichen geschlossen ist.

2. Ein verfahren nach Anspruch 1, dadurch gekennzeichnet, daß das Erhitzen bewirkt wird, um das Austrocknen des Materials und seine Pasteurisierung vollständig oder fast vollständig zu machen.

3. Ein Verfahren nach Anspruch 1, dadurch gekennzeichnet, daß das Heizen im wesentlichen ohne Abgaßdampf von dem Ofen bewirkt wird.

4. Ein Verfahren nach Anspruch 1, dadurch gekennzeichnet, daß die Materialzufuhr zu dem Durchflußofen und das Aufheizen derselben mit guter Genauigkeit teilweise durch die Verwendung einer Einlaßschleuse mit Pegelkontrolle und teilweise durch Verwendung eines Auslaßthermostaten am Auslaß des Ofens gesteuert werden.

5. Ein verfahren nach Anspruch 1, dadurch gekennzeichnet, daß nach dem Kühlungsschritt verschiedene Pilz- und Bakterienarten dem Materialfluß hinzugefügt werden, in erster Linie Arten, die als natürliche Antibiotika wirken.

6. Eine Anlage zur Durchführung des Verfahrens nach Anspruch 1, umfassend einen Durchflußofen mit Mitteln zum Bewegen des Materials, dadurch gekennzeichnet, daß das Auslaßende des Ofens mit einem geschlossenen und wärmeisolierten Fördertunnel verbunden ist, der durch eine Schleusenöffnung zu einem Tunnelabschnitt führt, der mit Mitteln zum Kühlen des empfangenen Materials, vorzugsweise durch ein transversales Durchblasen mit gefilterter Luft, verbunden ist, wobei der Tunnelabschnitt zu einer Zumischstation zum kontinuierlichen Hinzufügen von Additiven zum Materialfluß führt, im wesentlichen unter geschlossenen Bedingungen, während außerdem eine weitere Verbindung zu einer Lieferstation für das Material im wesentlichen im Verhältnis zur Umgebung geschlossen ist.

7. Eine Anlage nach Anspruch 6, dadurch gekennzeichnet, daß der Durchflußofen mit Mitteln zum Ausüben eines gut gesteuerten Materialflusses verbunden ist, nämlich teilweise mit einer Einlaßschleuse mit einem Pegeldetektor, der den Materialzufluß steuert, um das Material in der Einlaßschleuse konstant auf einem Pegel über dem oberen Teil der Einlaßöffnung des Ofens zu halten, und teilweise mit einem Thermosensor, der am Auslaßende des Ofens angeordnet ist, der die Ofenleistung (Heizleistung/Fließzeit) steuert, um eine voreingestellte Materialtemperatur, vorzugsweise 90-100°C, zu erreichen.

## Revendications

1. Procédé pour produire une matière d'engrais traitée à chaud ou une matière de substrat enrichie par engrais prête à l'emploi, dans lequel un engrais naturel ou une matière de substrat tel que du sphagnum, est amené en un écoulement dans un four de chauffage et, de préférence, par la suite des substances d'engrais et autres additifs sont ajoutés,
caractérisé en ce que la matière, à partir de la sortie du four, est amenée lentement dans un tunnel à isolation thermique et ensuite à une vitesse plus élevée et avec un moindre débit d'écoulement dans un poste de refroidissement, dans lequel l'écoulement de matière est refroidi par soufflage d'air et par la suite est amené dans un poste de mélange pour l'addition continue desdites substances et de là, vers un poste de distribution, grâce à quoi le transport de la matière a lieu jusqu'au bout dans un système de transport qui est sensiblement fermé par rapport à l'environnement.

2. Procédé selon la revendication 1,
caractérisé en ce que le chauffage est effectué pour achever ou presque achever le séchage de la matière et la pasteurisation de celle-ci.

3. Procédé selon la revendication 1,
caractérisé en ce que le chauffage est effectué sensiblement sans échappement de vapeur du four.

4. Procédé selon la revendication 1,
caractérisé en ce que l'alimentation de matière vers le four à écoulement et le chauffage de celui-ci sont commandés avec une bonne précision partiellement par l'utilisation d'un sas d'entrée avec commande du niveau et partiellement par l'utilisation d'un thermostat de sortie à l'extrémité de sortie du four.

5. Procédé selon la revendication 1,
caractérisé en ce que, après l'étape de refroidissement, différentes espèces bactériennes et fongiques sont ajoutées à l'écoulement de matière, principalement des espèces agissant en tant qu'antibiotiques naturels.

6. Installation pour réaliser le procédé selon la revendication 1, comprenant un four à écoulement avec des moyens pour agiter la matière,
caractérisée en ce que l'extrémité de sortie du four est reliée à un tunnel de transport fermé et à isolation thermique, lequel par une ouverture à sas conduit vers une section de tunnel qui est reliée à des moyens pour refroidir la matière reçue, de préférence par un soufflage transversal par de l'air filtré, ladite section de tunnel menant à un poste de mélangeage pour l'addition continue d'additifs à l'écoulement de matière, sensiblement dans des conditions fermées, tandis qu'également une autre liaison à un poste de distribution pour la matière est sensiblement fermée vis-à-vis de l'environnement.

7. Installation selon la revendication 6,
caractérisée en ce que le four à écoulement est relié à des moyens pour exercer un écoulement de matière bien contrôlé, c'est-à-dire partiellement un sas d'entrée avec un détecteur de niveau qui commande l'afflux de matière pour maintenir la matière dans le sas d'entrée constamment à un niveau au-dessus du haut de l'ouverture d'entrée du four, et partiellement par un capteur thermique placé à l'extrémité de sortie du four, qui commande l'effet du four (effet thermique/temps d'écoulement) pour atteindre une température de matière préréglée, de préférence 90-100°C.
